# EUROPEAN PATENT APPLICATION

(11) **EP 0 595 483 A1**
(43) Date of publication of application: **04.05.1994**
(21) Application number: 93307830.5
(22) Date of filing: 01.10.1993
(51) Int. Cl.: H04N 1/32, H04M 1/65

(54) **Methods and apparatus for automatic switching between transmission of a spectrally redundant outgoing signal and reception of an incoming signal**

(30) Priority: 30.10.1992 US 969024
(71) Applicant: NATIONAL SEMICONDUCTOR CORPORATION, Santa Clara California 95051-8090 (US)
(72) Inventor: Almagor, David, Herzliyab (IL); Gluska, Eran, Tel-Aviv (IL)
(74) Representative: Horton, Andrew Robert Grant

(57) **Abstract**

An improved method and apparatus for automatic switching between transmission of a spectrally redundant outgoing signal and reception of an incoming signal when communicating through a partially reflective bidirectional communication channel (20). Filtering methods (16) and apparatus are utilized to attenuate from the transmission of the outgoing signal components which are within a spectrum of the incoming signal such that echoes of the outgoing transmission do not interfere with the detection of the incoming signal.

## Description

A portion of the disclosure of this patent document contains material which is subject to copyright protection. The copyright owner has no objection to the facsimile reproduction by anyone of the patent disclosure, as it appears in the Patent and Trademark Office patent files or records, but otherwise reserves all copyright rights whatsoever.

### BACKGROUND OF THE INVENTION

The present invention relates to an improved method and apparatus for automatic switching between the transmission of a spectrally redundant outgoing signal and the reception of an incoming signal. The present invention has particular application to efficiently distinguishing between a voice call and a call originating from a remote sending facsimile (fax) system. The switching system of the present invention provides for an improved detection and switching system which in one embodiment prevents the loss of fax data while continuing to provide a properly timed outgoing voice message.

By way of background, when a combined fax system/voice answering machine which is connected to a partially reflective bi-directional communication channel (such as a two-wire telephone line) answers an incoming call, the voice answering machine almost immediately plays an outgoing message (OGM). The machine also simultaneously attempts to detect whether the call originates from a remote fax system in order to switch to a fax session. A calling fax system typically sends a calling signal which is known as a "CNG" signal. The CNG signal is a substantially sinusoidal signal with a frequency of 1100 Hertz having a repetitive 0.5 sec. on time and a 3 sec. off time, with a total duration of about 30 seconds. A combined fax system/voice answering machine may also operate to provide dual tone multi-frequency (DTMF) detection for the remote control of the voice answering machine for functions such as message playback or outgoing message record. A combined fax system/voice answering machine may additionally provide other tone detection functions to determine the presence of a dial tone or a busy tone each of which may be indicative of a disconnected call.

The main problem with existing combined fax system/voice answering machines is the poor detection of the CNG signal. In a typical telephone network the CNG signal can have a level as low as -51 Dbm, while a combined fax system/voice answering machine is sending out an outgoing message at a level of about -6 Dbm, with even higher peaks. Because of the nature of a typical telephone communication network, the outgoing message is partially reflected back to the combined fax system/voice answering machine in the form of an echo. The amplitude of such an echo is usually higher than that of the remote CNG signal.

The result of such an echo is the strong likelihood that the combined machine will be unable to recognize the CNG signal during the duration of the outgoing message, since the echo of the outgoing message will interfere with the combined fax system/voice answering machine's ability to detect the CNG signal. Further, if the duration of the outgoing message is longer than the received duration of the CNG signal, it is quite possible that an attempted fax transmission will fail.

The present invention provides a method and apparatus for avoiding the problems which arise from an echo of an outgoing message.

### SUMMARY OF THE INVENTION

In the present invention, an improved method and system for automatic switching between incoming facsimile and voice calls is disclosed. The method and system avoid the problem of interference from an outgoing message echo by relying upon the redundancy inherent in the spectrum of an outgoing signal, in this case human speech. The present invention provides an outgoing message which has been filtered to greatly attenuate the spectral content of the outgoing message which is within the spectrum of the incoming signal, in this case a facsimile transmission, and more particularly within the spectrum of the CNG signal. In this way, any echo from an outgoing message does not interfere with the detection of a CNG signal. Thus, a combined system/machine of the present invention detects a low level CNG signal even in the presence of a relatively strong echo of an outgoing message without affecting the intelligibility of the outgoing message.

### BRIEF DESCRIPTION OF THE DRAWING

Figure 1 is a block diagram of the improved combination voice answering machine and fax machine of the present invention.

Figure 2(a) is a graph showing the amplitude of typical voiced speech as a function of sample number.

Figure 2(b) is a graph showing the magnitude of typical voiced speech as a function of frequency.

Figure 3(a) is a graph showing the amplitude of typical unvoiced speech as a function of sample number.

Figure 3(b) is a graph showing the magnitude of typical unvoiced speech as a function of frequency.

Figure 4(a) is a graph of the 0 to 4 kilohertz frequency response of an infinite impulse response implementation of the notch filter of Figure 1.

Figure 4(b) is a graph of the 1.0 to 1.2 kilohertz frequency response of an infinite impulse response implementation of the notch filter of Figure 1.

Figure 5(a) is a graph of the 0 to 4 kilohertz frequency response of a finite impulse response implementation of the notch filter of Figure 1.

Figure 5(b) is a graph of the 1.0 to 1.2 kilohertz frequency response of a finite impulse response implementation of the notch filter of Figure 1.

Figure 6 is a detailed block diagram of the CNG detector of Figure 1.

Figure 7 is a block diagram of an infinite impulse response filter utilized in the preferred embodiment of the tone detection DSP block of Figure 6.

Figure 8 is a graph showing the frequency response of the preferred embodiment of the infinite impulse response filter of Figure 7.

### DETAILED DESCRIPTION OF THE DRAWING

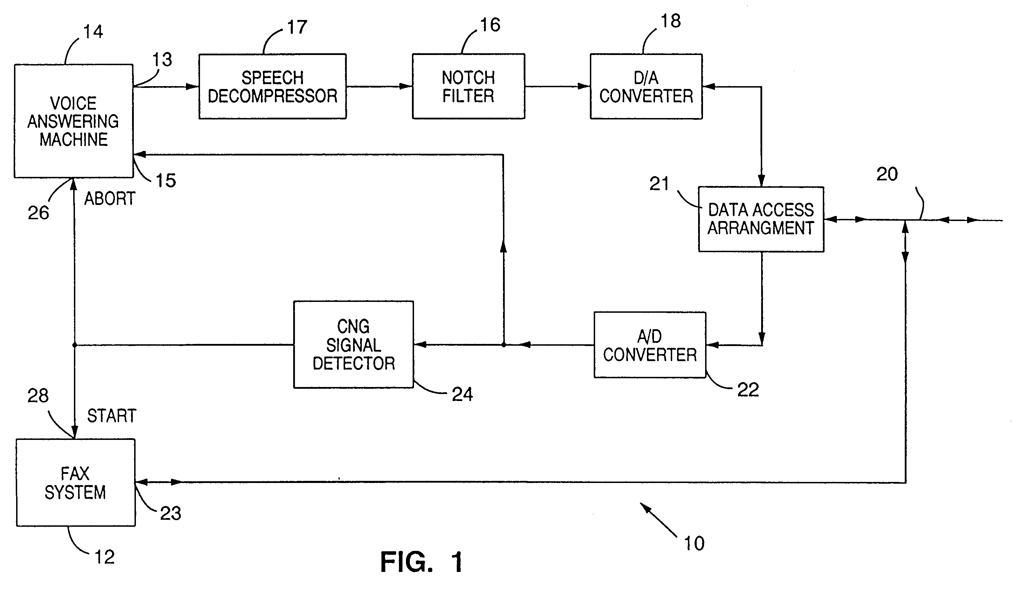

Referring to Figure 1, there is shown a block diagram of a combined fax system/voice answering machine 10. The combined fax system/voice answering machine 10 includes a fax system 12 and a voice answering machine 14. Any one of a number of different fax systems can be utilized for the fax system 12, for example, a personal computer with a fax card and fax software or a more conventional single function fax machine. In the preferred embodiment of the subject invention, the voice answering machine 14 utilizes a digital memory for the storage of both an outgoing message and an incoming message and, the answering machine 14 has a digital output 13 for outgoing messages separate from a digital input 15 for incoming messages. The combined fax system/voice answering machine 10 further comprises a notch filter 16, a speech decompressor 17, and a digital-to-analog converter 18. The output of the digital-to-analog converter 18 is connected to a two-wire telephone line 20 through a data access arrangement 21. Data access arrangements are well known in the art and operate to provide both transmit/receive separation and on-hook/off-hook switching. The telephone line 20 is also connected through the data access arrangement 21 to an analog-to-digital converter 22 and to a line input 23 of the fax system 12. The output of the analog-to-digital converter 22 is connected to both the incoming message input 15 of the answering machine 14 and to a CNG detector 24. An output of the CNG detector 24 is connected to both an abort input 26 of the voice answering machine 14 and a start input 28 of the fax system 12.

In the combined fax system/voice answering machine 10, when a telephone call is made to a telephone number assigned to the line 20, a ringing signal, typically an alternating current signal having a potential of about 90 volts, appears on the telephone line 20. The data access arrangement 21 senses the analog ringing signal and in response thereto connects the line 20 to the analog-to-digital converter 22. A local telephone exchange switch (not shown) senses this "off-hook" connection and ceases the transmission of the analog ringing signal. Within a few seconds the transmission of an outgoing message from the answering machine 14 commences. The purpose of the OGM is to either simply make an announcement or to convey a message which will prompt a human caller to leave a voice message (also referred to herein as an "incoming message" or "ICM"). It is important that the transmission of the outgoing message be commenced within no more than three seconds, since beyond that point a typical human telephone caller is likely to assume that his/her call has not been properly connected and in response will disconnect the call or, as is more commonly described, will "hang up."

In the preferred embodiment of the invention, the outgoing message is stored in digital form within a random access memory of the voice answering machine 14. When the outgoing message is read out, the message is decompressed by the speech decompressor 17, filtered through the notch filter (which in the preferred embodiment is a digital filter) 16, converted to analog form by the digital-to-analog converter 18 and then coupled to the telephone line 20 through the data access arrangement 21. During the same period that the outgoing message is transmitted, the combined fax system/voice answering machine 10 attempts to distinguish between human voice calls and incoming fax calls in order to immediately activate the fax system 12 if a fax transmission has been positively identified. In further detail, signals received from the telephone line 20 are routed by the data access arrangement 21 to analog-to-digital converter 22. These received signals are converted by the analog-to-digital converter 22 to digital form and are monitored by the CNG detector 24. Upon detection of a CNG signal, the CNG detector 24 sends a signal to both the abort input 26 of the voice answering machine 14 and to the start input 28 of the fax system 12. In response to this signal from the CNG detector 24, the outgoing message from the answering machine 24 is immediately terminated (whether or not the outgoing message has been transmitted in its entirety) and the fax system 12 is enabled. The fax system 12 maintains the off-hook condition of the telephone line 20 either until a fax transmission is completed or until an error condition causes the fax system 12 to disconnect from the telephone line 20. In responding to a calling fax system which initiated the fax transmission, the fax system 12 sends signals to the telephone line 20 in accordance with CCITT T.30, an international standard which is further described below. If no CNG signal is detected, once the outgoing message has been transmitted, the voice answering machine 14 switches to an incoming message mode whereby a human voice caller may leave a message which is communicated over the telephone line 20, routed by the data access arrangement 21 to the analog-to-digital converter 22 and provided to the incoming message input 15 of the voice answering machine 14. In the preferred embodiment of the invention, the voice answering machine 14 includes a speech compressor to compress the incoming message. The compressed incoming message is then stored in a random access memory within the voice answering machine 14.

In further detail, the notch filter 16 operates to greatly attenuate from the outgoing message virtually all signals falling within a narrow bandwidth of the 1100 Hertz CNG signal. CCITT recommendations provide the de facto standards used by telephone network equipment manufacturers. Specifically, recommendation T.30 describes the handshake protocol used between fax machines. Fax machines communicate using frequency shift keying modulation of a sinusoidal signal having a frequency of 1750 Hertz. The amount of shift is typically ± 100 Hertz. In T.30, the CNG signal is defined and serves to indicate a calling non-speech terminal, and that terminal is in transmit mode and ready to transmit. The CNG signal is an 1100 Hertz tone with a repetitive on period of 0.5 second and an off period of 3 seconds. Additionally, a timing tolerance of ±15% and a frequency tolerance of ±38 Hertz are allowed. The CNG signal is transmitted by the calling fax system for 30 seconds immediately following the completion of dialing by the calling fax system. Since post dialing call routing and connection can sometimes take as long as up to 20 seconds, especially with international connections, the actual duration of the CNG signal available to a receiving fax system is always less than 30 seconds. Given the timing, frequency and duration of the CNG signal, however, the CNG signal can serve as a means to distinguish between fax and voice calls.

The CNG signal transmitted by a calling fax system passes through a telephone network and undergoes various channel impairments such as additive white noise, frequency offset and signal attenuation. The receive level of CNG signals on the telephone line 20 is determined by the transmitted signal level and by channel attenuation, and can be as low as -40 dbm in worst case connections. As an example, a recent limited survey performed by CCITT Study Group 15 (high speed modems) indicates that receive signal levels within Europe typically span the range of -39 to -14 dbm and those of international connections lie between -28 and -20 dbm. Therefore, allowing for the possibility of even greater attenuation, detection sensitivity for the CNG signal should be as low as -43 dbm.

The typical outgoing message usually consists of a few human voice sentences. The outgoing message is partially reflected back to the combined fax system/voice answering machine 10 (audibly as echoes) due in part to an imperfect match between the output impedance of the system 10 and the input impedance of the telephone line 20. The echo level depends upon the impedance mismatch and may be quite high. In addition, the echo level is unpredictable and can vary significantly from one installation to another. Furthermore, additional echoes may exist because of imperfect long distance connections, an impedance mismatch in the connection between a two-wire pair and a local exchange or between a local exchange and an interexchange carrier. Furthermore, propagation delays attributable to satellite links often result in echoes, particularly with alternative interchange carriers. Short and long-term echoes may exist simultaneously.

Any such outgoing message echo combines additively with the remote CNG signal, which CNG signal may already be distorted by the telephone network, and the combined signal is presented to the combined fax system/voice answering machine 10 as an input on which the CNG detector 24 bases its switching decision.

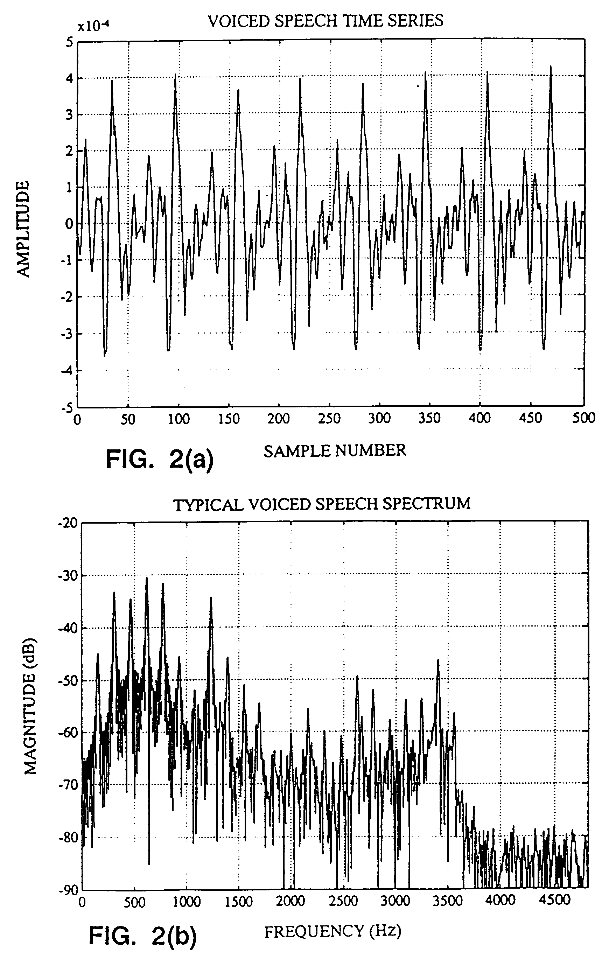

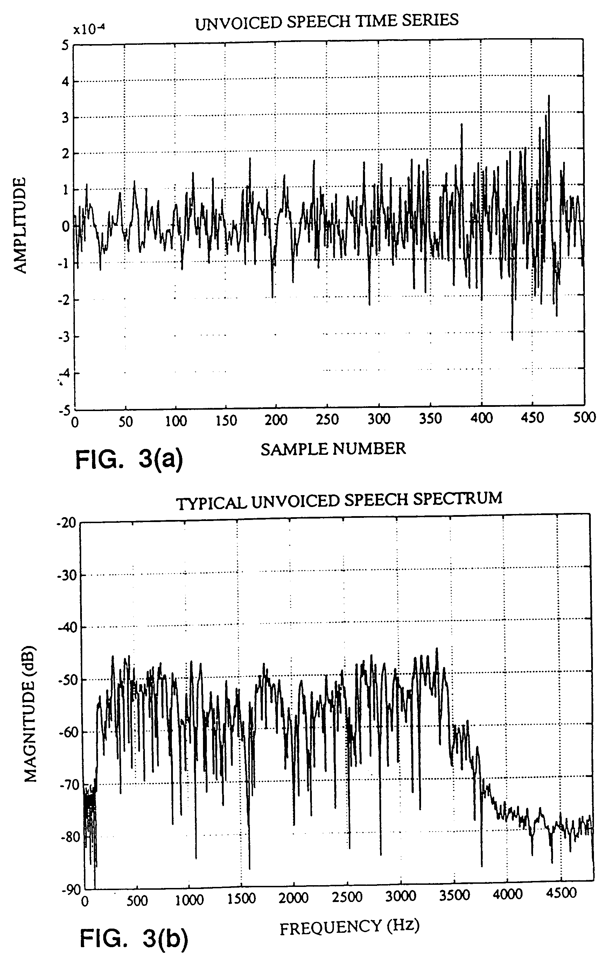

Referring now to Figures 2(a), 2(b), 3(a) and 3(b), typical voiced and unvoiced speech time series and spectra are shown. As is apparent from Figures 2(a), 2(b), 3(a) and 3(b), human speech typically possesses a range of amplitudes as well as a complex spectrum which is highly varying, spanning a range of roughly 0 to 4 kilohertz, and is generally divided into two categories: voiced and unvoiced. The frequency spectrum of voiced speech mainly consists of signals having frequencies below 1 kilohertz, while unvoiced speech is more spectrally uniform in nature (are the 0+ 0+ 0 4 kilohertz range). Both speech categories possess spectral energy both at and near the frequency of the CNG signal (approximately 1100 Hertz), and therefore the echo of an outgoing message is likely to mask and distort any received CNG signal.

Human speech has some inherent redundancy properties which make high quality recognition feasible. The subject invention makes use of this redundancy property. In further detail, the bandwidth of the notch filter 16 as described further herein, is such that the deletion or substantial attenuation of voice signals within that bandwidth, centered about the frequency of the CNG signal, will not result in a loss of outgoing message intelligibility to a remote voice caller.

Referring now to the notch filter 16 of Figure 1, such a notch filter may be implemented through the use of dedicated hardware which operates as a digital filter. An alternative embodiment of the notch filter 16 comprises an all software solution which can be realized using either of two microprocessor chip sets available from National Semiconductor Corporation of Santa Clara, California. One such chip set consists of an NS32FX16 processor together with an NS32FX210 processor to implement a fixed software notch filter. Another chip set consisting of an NS32FX164 processor and an NS32FX200 processor contains a cascade of infinite impulse response filters built into the chip set to thereby provide a hardware implementation of the notch filter 16. This second chip set's implementation of a filter makes efficient use of the chip set resources but also utilizes no CPU power and no memory thereby allowing the chip set to also function as the speech decompressor 17 of Figure 1.

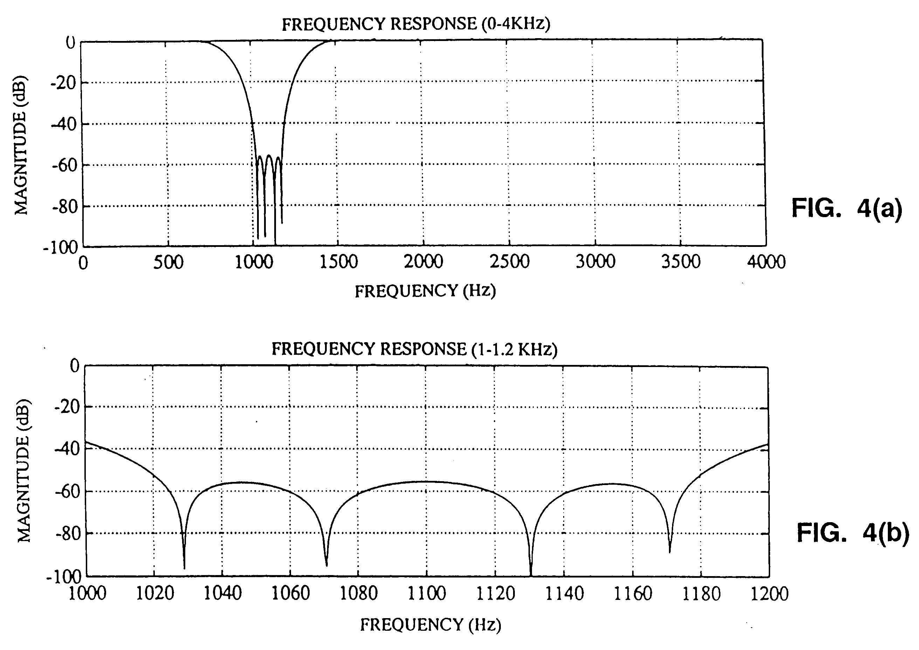

Referring now to Figures 4(a) and 4(b), the transfer function of one preferred embodiment of the notch filter 16 of Figure 1 is shown. At a -20 db attenuation, a filter having a frequency response as shown in Figures 4(a) and 4(b) has a bandwidth of approximately 295 Hertz. This transfer function is realized through an infinite response implementation of the notch filter. Such a filter is built into the chip set consisting of an NS32FX164 processor and an NS32FX200 processor. From Figures 4(a) and 4(b) it is shown that a deep notch centered about the CNG signal frequency at 1100 Hertz operates to remove from the outgoing message most of the spectral energy at and near the CNG signal frequency.

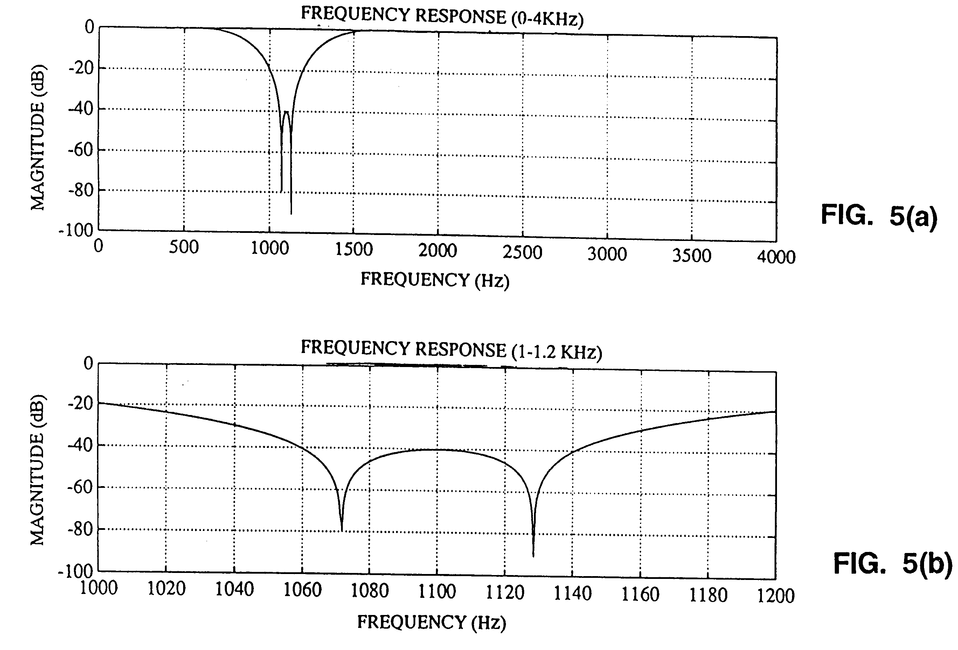

An alternative embodiment of the notch filter 16 is a finite impulse response filter. Referring now to Figures 5(a) and 5(b), the frequency response of a preferred implementation of a finite impulse response notch filter is shown. As is apparent from a comparison of Figures 4(a) and 4(b) with Figures 5(a) and 5(b), the notch produced with the finite impulse response filter is somewhat sharper. At a -20 db attenuation, a filter having a frequency response as shown in Figures 5(a) and 5(b) has a bandwidth of approximately 200 Hertz. However, since there are a large number of design techniques for both infinite impulse response filters and finite impulse response filters, one type of filter is not necessarily better than the other.

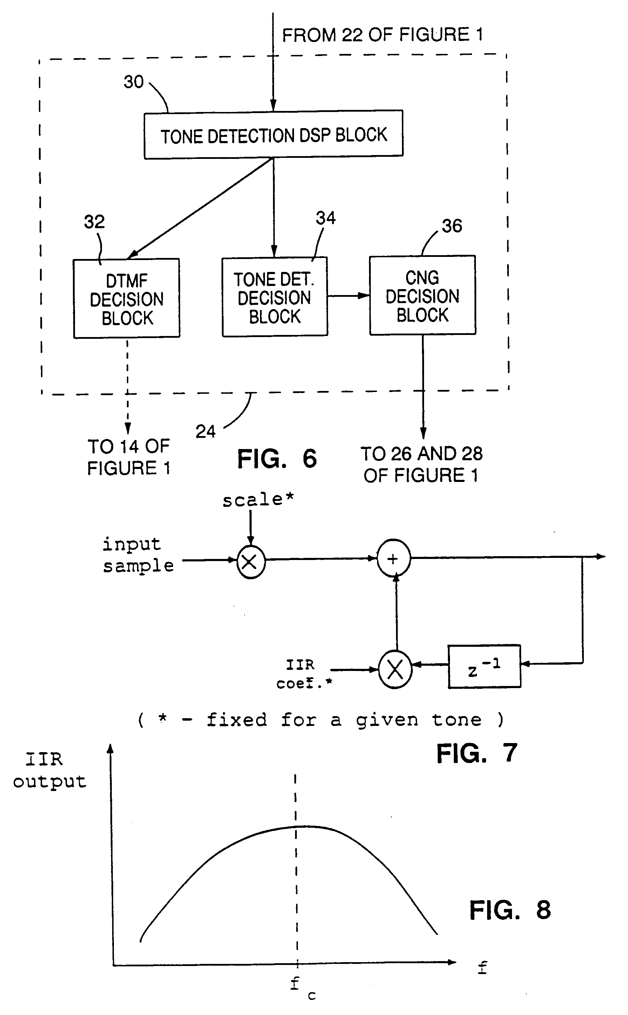

Referring now to Figure 6, the CNG signal detector 24 of Figure 1 is shown in greater detail. A tone detection digital signal processor 30 receives the output of signal samples from analog-to-digital converter 22 of Figure 1 and passes these signal samples through a cascade of infinite impulse response filters. One such filter is shown in block diagram form in Figure 6; the frequency response of this filter is shown in Figure 7 where fc = 1100 Hertz. Referring again to Figure 6, these filters are designed to detect DTMF tones and 1100 Hertz tone for CNG signal detection. The DTMF decision block 32 performs a set of tests on DTMF tones (8 tones defined by DTMF and 10 rejecting tones). In the preferred embodiment of the invention, once every 10 milliseconds the DTMF decision block 32 outputs a decision regarding which DTMF digit, if any, was detected. The decision can be utilized to remotely control the playback of incoming messages stored within the voice answering machine 14 or to change the outgoing message stored within the voice answering machine 14. In such an implementation, the output of the DTMF decision block 32 would be connected to the voice answering machine 14.

A tone detection decision block 34 receives from the tone detection digital signal processor 30 any signals at or near the 1100 Hertz frequency of the CNG signal, and then outputs a decision every 20 milliseconds on whether any such signals have been received. The tone detector decision block 34 also performs an automatic gain control algorithm to ensure a large dynamic range for tone detection. Every 20 milliseconds a CNG decision block 36 receives a binary decision indicating whether or not a CNG signal at or near 1100 Hertz was detected. If such a CNG signal is detected, the CNG decision block 36 implements a pattern detection logic in order to identify the CNG signal pattern under noise conditions. A set of counters is maintained within the CNG decision block 36 for both on and off decisions, thus identifying the period length as well as the number of "glitches" (false detection during "off" period or misdetection during "on" period). Correlating these counters yields the final identification of the CNG signal. Furthermore, each CNG "on" + "off" period is considered a "CNG ring." The CNG decision block 36 records the number of CNG rings identified and activates a fax session following the detection of a predetermined number of rings. This predetermined number represents a trade-off between quickly switching to fax session and the reliability of the detection.

With reference to the CNG detector 24 of Figures 1 and 6, a first embodiment of an algorithm for the CNG decision block 36 is explained in further detail. Four counters are maintained and updated every 20 milliseconds based upon the decision of the tone detection digital signal processor 30. The four counters are (1) a current "on" counter, (2) a current "off" counter, (3) a cumulative "on" counter, and (4) a cumulative "off" counter. Every 20 milliseconds, either the current "on" counter or the current "off" counter is incremented and the other counter is zeroed. Either the cumulative "on" counter or the cumulative "off" counter is incremented.

The four counters are correlated in order to decide whether an "on" or "off" period is detected. Correlation is based upon the expected period length and the allowed number of glitches. The approximate current counter is cleared when a transition from "on" to "off" or from "off" to "on" occurs, but a cumulative counter is cleared only when an "on" or "off" period is detected.

When a current counter reaches a threshold, a new "on" or "off" period is assumed. Assuming an "off" period has started, the following two expressions represent the length of the previous "on" period, and the number of glitches:
A. Glitches = cumulative_off - current_off
B. Length = cumulative_on + glitches.

If "length" is within permitted limits, and "glitches" is less than a threshold, an "on" period is counted, the cumulative "on" counter is cleared, and the cumulative "off" counter is set to the current "off" counter. The number of detected "on" and "off" periods is verified to be balanced before validating the existence of CNG signal.

Tests have shown that very reliable CNG detection, that is detection within the first two CNG periods, approximately 10 seconds, can be achieved down to typical CNG signal levels of -38 dbm. Acceptable performance, that is detection within the first full two periods, approximately 10 seconds, can be achieved at about -43 dbm CNG signal level. This level of performance is sufficient for practically the entire CNG signal level range likely to occur on current telephone networks and results in an effective and reliable fax/voice switch system. The following is a listing of the software for the above described algorithm :

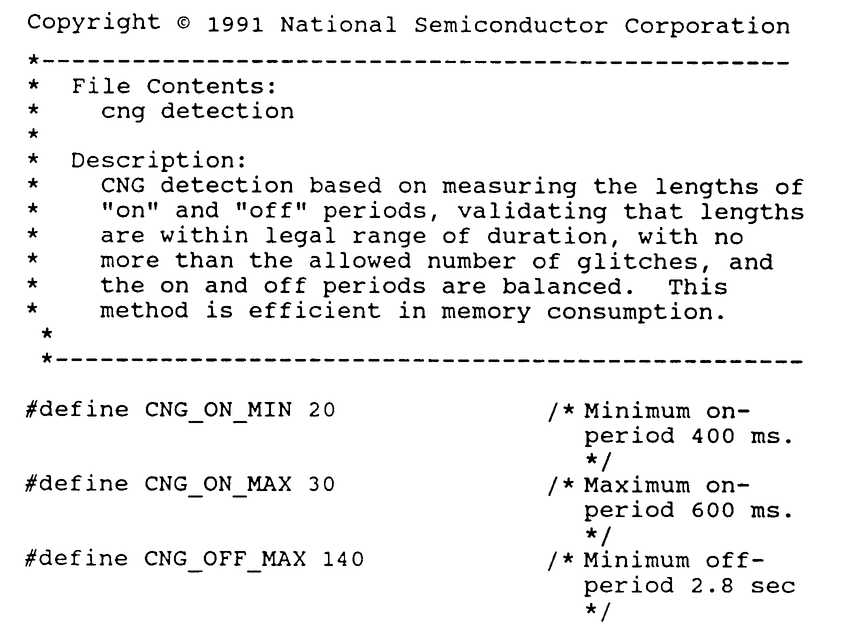

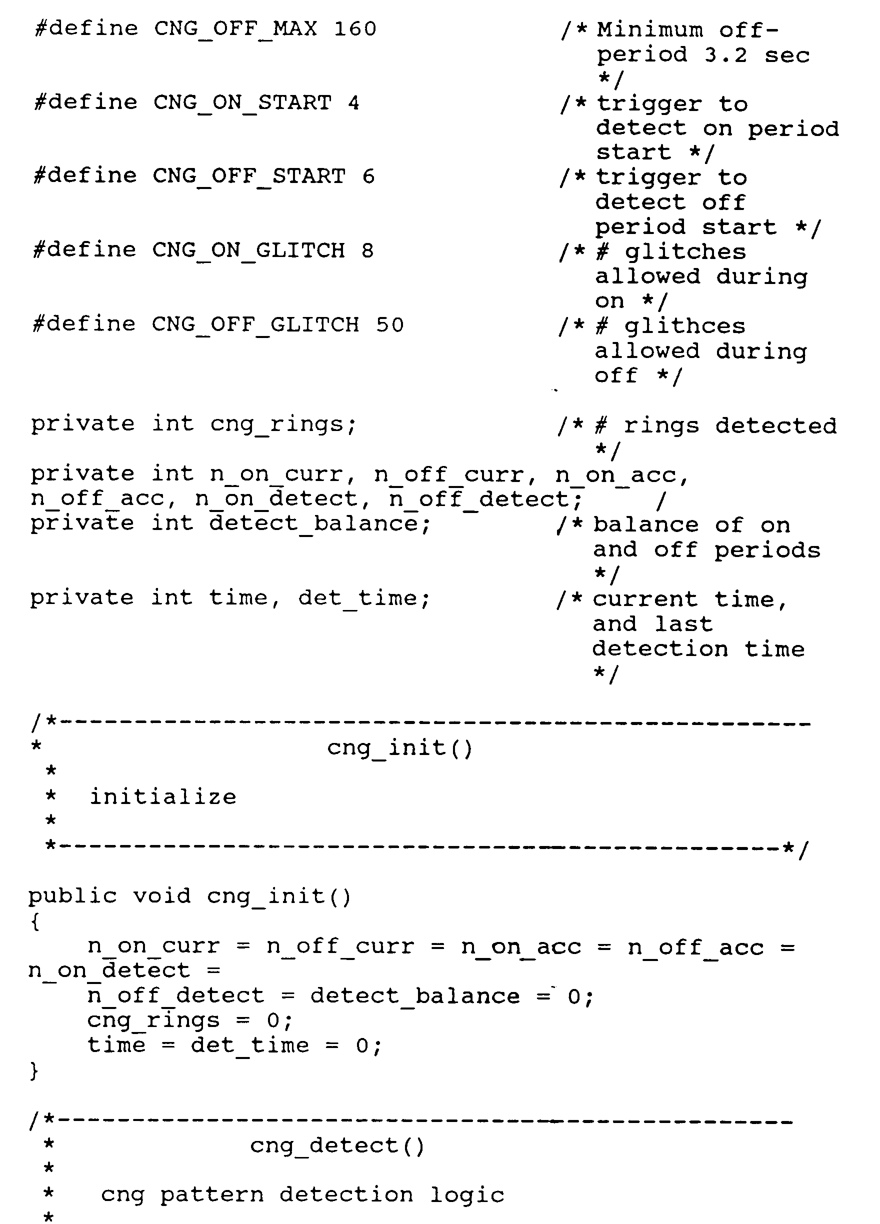

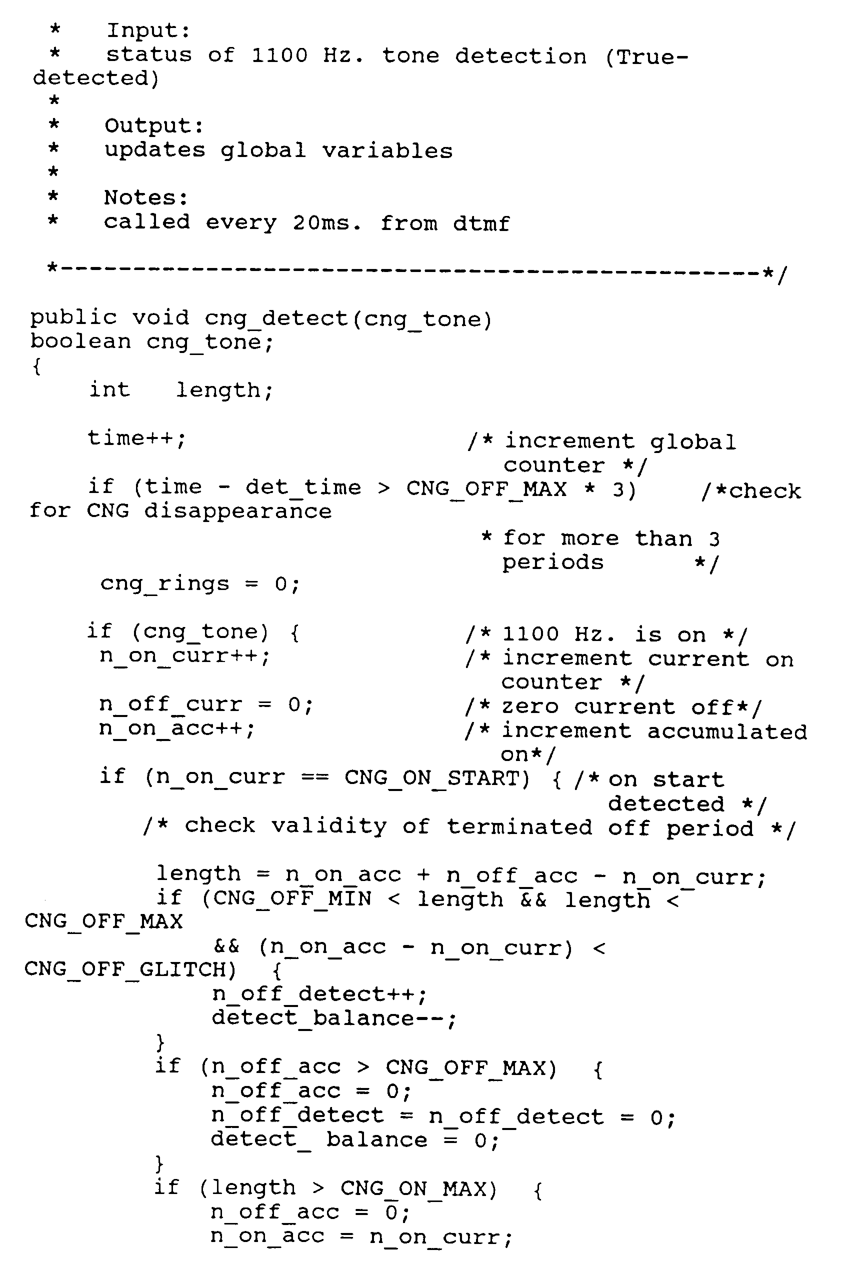

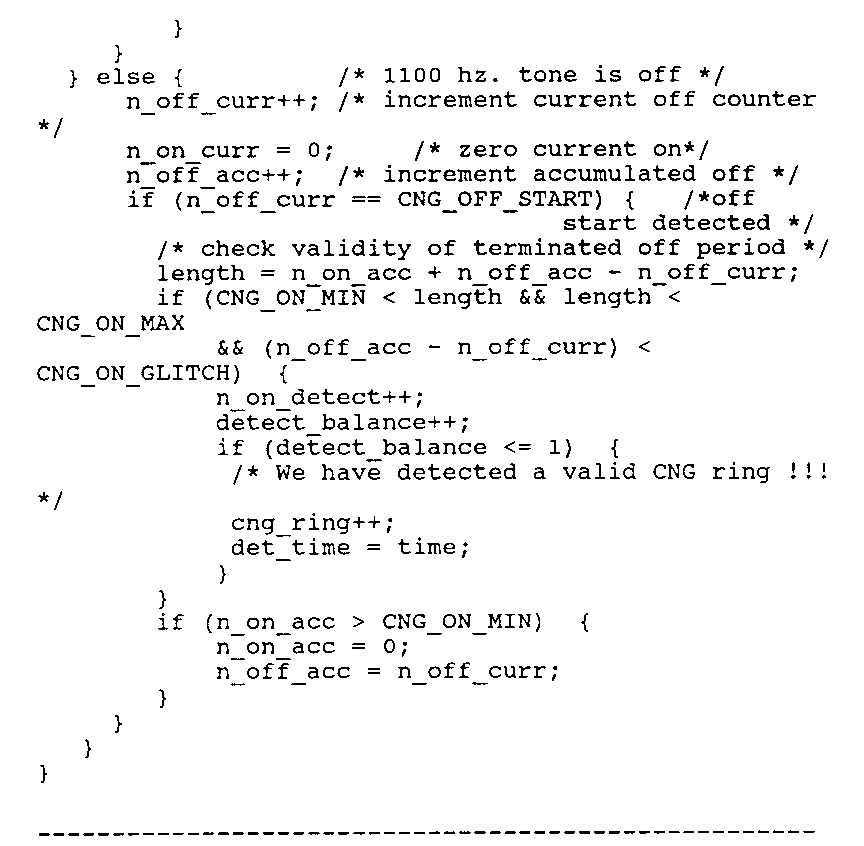

With reference again to the CNG detector 24 of Figures 1 and 6, a second embodiment of an alogrithm for detecting the CNG signal utilizes a correlation detector. A correlation detector, also known as an integrate and dump filter, has the capability to detect signals in the presence of significant qualtities of noise. The following is a listing of the software for the correlation detector of the second emboidment:

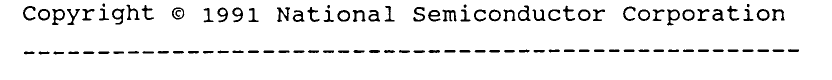

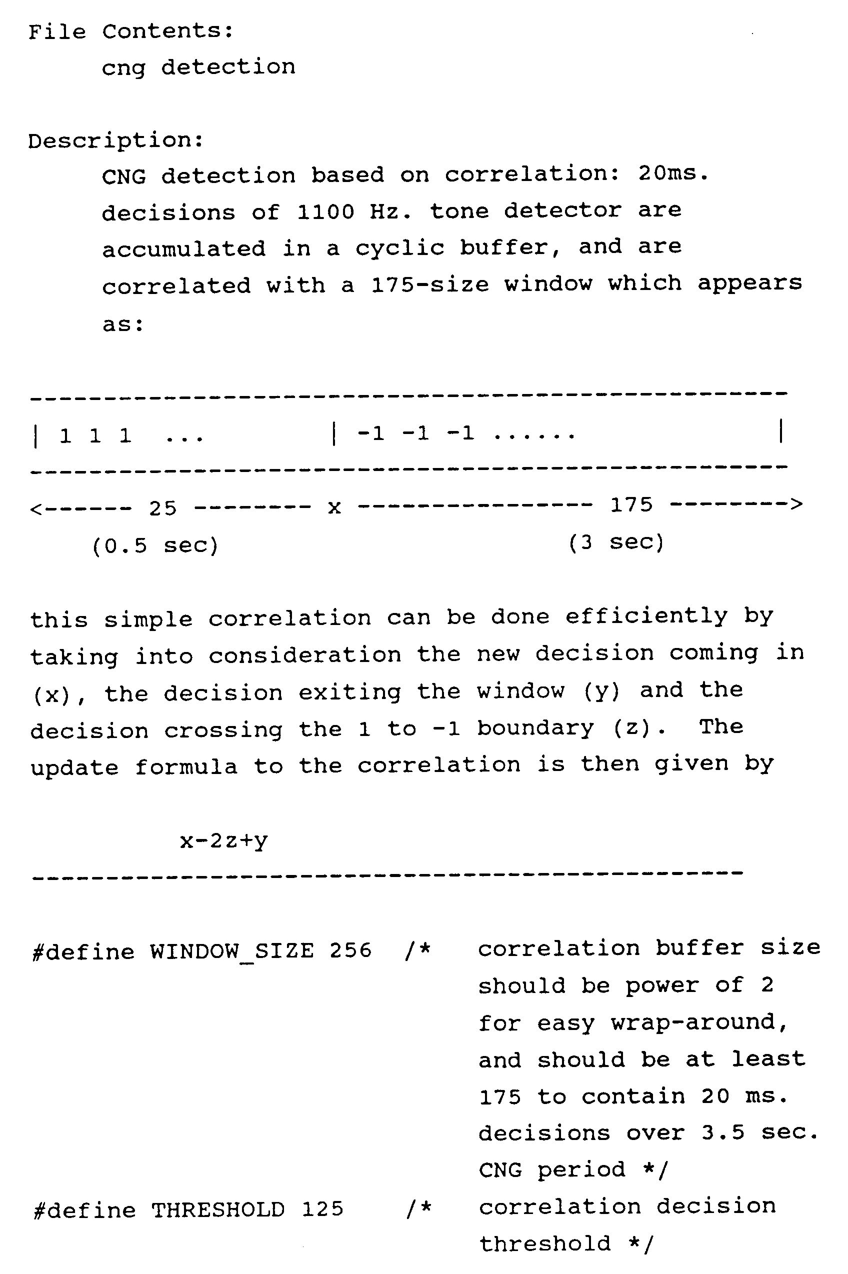

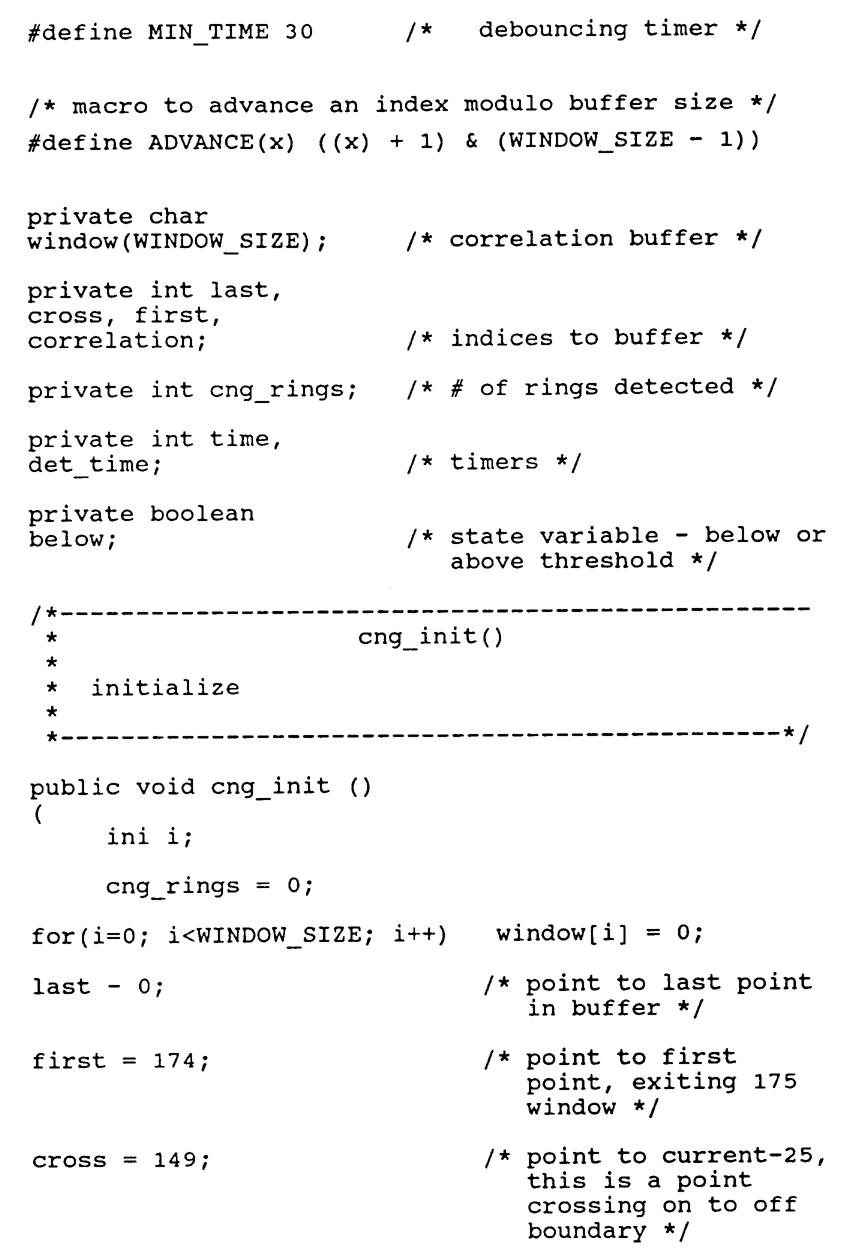

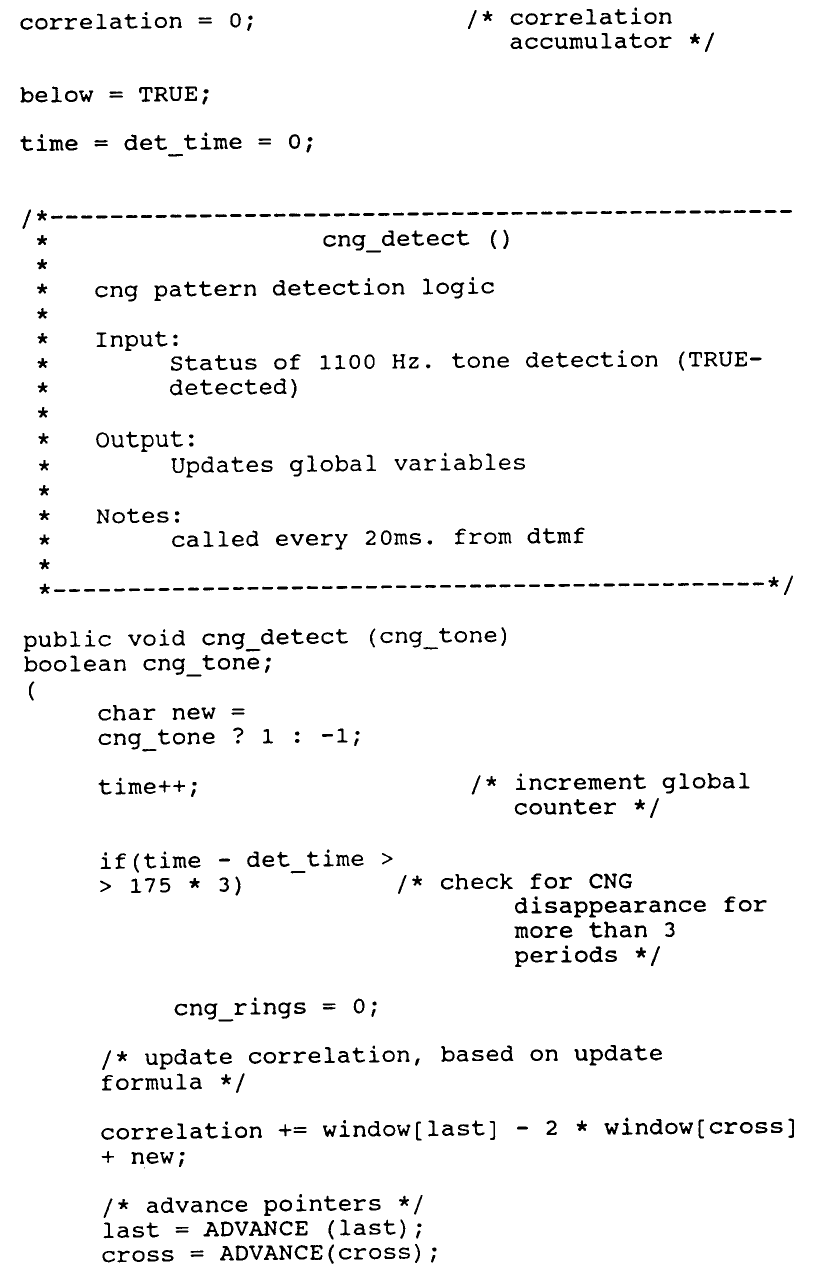

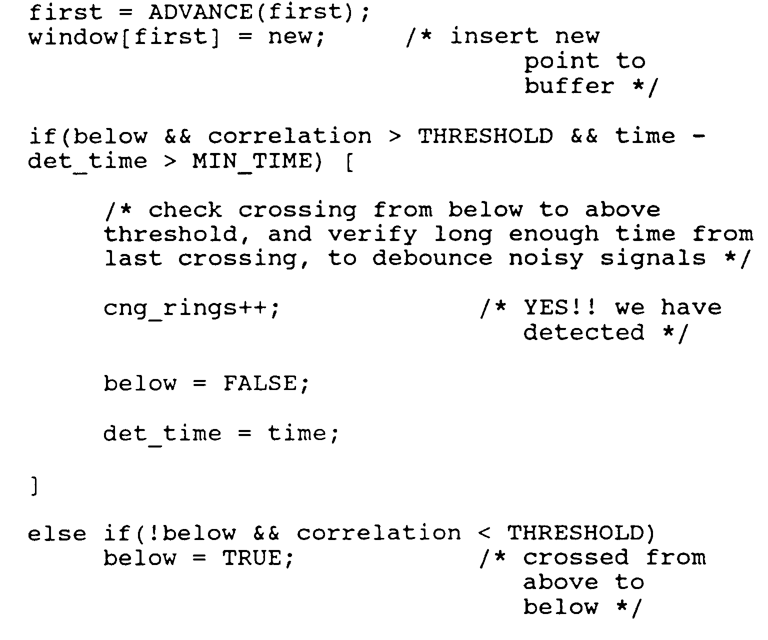

In an alternative embodiment of the subject invention, the voice answering machine 14 utilizes magnetic recording tape to record both the outgoing voice message and incoming voice messages. Thus, the digital signals provided to and from the voice answering machine 14 are recorded on the magnetic recording tape using apparatus which is well known in the art. In yet another alternative embodiment, magnetic recording tape is utilized within the voice answering machine 14 to record analog signals representative of an outgoing voice message and incoming voice messages. In this alternative embodiment, the digital-to-analog converter 18 and the analog-to-digital converter 22 are deleted and the notch filter 16, the speech decompressor 17 and the CNG signal detector 24 are configured to operate on analog signals.

The subject invention also has applications beyond combined fax system/voice answering machines. In particular, the subject invention is applicable to a system which includes a voice answering machine in combination with the reception of signals representative of non-voice data, where the frequency spectrum of such non-voice data is within the frequency spectrum of the outgoing message.

Many data modems presently in use transmit a repetitive CNG signal having a frequency at 1300 Hertz with an on time of 0.5 to 0.7 second and an off time from 1.2 to 2.0 seconds, having a total duration usually less than 60 seconds.

Therefore, to utilize the present invention with a combination data modem/voice answering machine, the center frequency of the notch filter 16 would be set at 1300 Hertz, and the CNG signal detector 24 would be programmed to first detect a CNG signal of 1300 Hertz. If such detection occurs, then the CNG signal detector would determine whether the timing of the CNG signal detector corresponds to the known pattern of the data modem CNG signal.

It is also possible to utilize the subject invention in any application where it is desired to transmit an outgoing complex waveform signal to a partially reflective bidirectional communication channel while simultaneously sensing for a possible incoming signal from the communication channel. In particular, the subject invention is applicable to a system where the outgoing signal is a complex waveform signal having redundant components and a first bandwidth, and an incoming signal to be sensed has a second bandwidth where the second bandwidth is less than the first bandwidth and the communication channel is bidirectional and exhibits reflective properties.

In yet another embodiment of the present invention, a first detector for detecting a ringing signal would, in response to a ringing signal, initiate the transmission of an outgoing complex waveform signal, where the signal has redundant components within a first bandwidth, and where the outgoing complex waveform signal has been filtered to greatly attenuate from that signal those components which fall within the bandwidth of an incoming signal which is to be sensed. Upon the sensing of the incoming signal, this embodiment of the invention could terminate the transmission of the outgoing complex waveform signal and commence the reception, display and/or storage of the incoming signal.

It is apparent from the foregoing that a new and improved system and methods have been provided for transmitting a complex waveform signal to a partially reflective bidirectional communication channel while simultaneously sensing for an incoming signal from said partially reflective bidirectional communication channel. While only certain preferred embodiments have been described in detail, as will be apparent to those familiar with the art, certain changes and/or modifications can be made without departing from the scope of the invention as defined by the following claims.

## Claims

1. A system for simultaneously transmitting an outgoing complex waveform signal to a partially reflective bidirectional communication channel and sensing an incoming signal from said partially reflective bidirectional communication channel comprising:
means for generating an outgoing complex waveform signal having redundant components within a first bandwidth;
means for receiving an incoming signal, said incoming signal having a second bandwidth, said second bandwidth being less than said first bandwidth;
means for attenuating from said outgoing complex waveform components substantially within said second bandwidth and for providing an attenuated outgoing complex waveform signal to said partially reflective bidirectional communication channel; and
means for detecting said incoming signal and in response thereto enabling said means for receiving an incoming signal and disabling said means for generating an outgoing complex waveform.

2. A method of simultaneously transmitting an outgoing complex waveform signal to a partially reflective bidirectional communication channel and sensing an incoming signal from said partially reflective bidirectional communication channel comprising the steps of:
generating an outgoing complex waveform having redundant components within a first bandwidth;
attenuating from said outgoing complex waveform signal components substantially within a second bandwidth, said second bandwidth being less than said first bandwidth; and
detecting an incoming signal, said incoming signal having said second bandwidth and in response thereto enabling means for receiving said incoming signal and disabling the generation of said outgoing complex waveform.

3. A system for automatically responding to a partially reflective combined voice-data communication channel comprising:
a generator for generating an outgoing voice message;
a receiver for receiving an incoming data signal; an attenuator for attenuating from said
outgoing voice message signals substantially within the spectrum of at least a portion of said incoming data signal and providing an attenuated outgoing voice message to said partially reflective combined voice data channel; and
a detector for detecting said incoming data signal and in response thereto enabling said means for receiving an incoming data signal and disabling said means for generating an outgoing voice message.

4. A system for automatically answering voice telephone calls and receiving data transmissions from a partially reflective bidirectional communication channel, the system comprising:
a voice message generator for generating an outgoing voice message;
a data receiver for receiving an incoming data transmission from said partially reflective bidirectional communication channel;
a first detector for detecting a ringing signal from said partially reflective bidirectional communication channel and in response to the presence of the ringing signal, enabling said voice message means;
a second detector for detecting from said partially reflective bidirectional communication channel a data signal within said data transmission and in response to the presence of said data signal disabling said voice message means and enabling said data receiving means; and
a filter for attenuating from said outgoing voice message signals substantially within the spectrum of said data signal and providing a filtered outgoing voice message to said partially reflective bidirectional communication channel.

5. A method of automatically answering voice telephone calls and receiving data transmission from a partially reflective bidirectional communication channel, the method comprising the steps of:
detecting a ringing signal from said partially reflective bidirectional communication channel and in response thereto generating an outgoing voice message;
attenuating from said outgoing message at least a portion of the spectrum of said data transmission;
providing an attenuated outgoing message to said partially reflective bidirectional channel; and
detecting the presence of said data transmission from said partially reflective bidirectional communication channel and in response thereto terminating said outgoing voice message and enabling means for receiving said data transmission.

6. A system for switching between a transmission of an outgoing voice message and reception of an incoming facsimile transmission, the system comprising:
a generator for generating an outgoing voice message;
a filter for filtering said outgoing voice message to attenuate from said outgoing voice message signals substantially within at least a portion of the spectrum of said facsimile transmission;
a receiver for receiving an incoming facsimile transmission; and
a detector for detecting said facsimile transmission and in response thereto enabling said means for receiving an incoming facsimile transmission and disabling said means for generating an outgoing voice message.

7. The system of Claim 6 wherein said generator further comprises:
a memory for storing said outgoing voice message;
a reader for reading said storage means and for providing data representative of the contents of said storage means;
a decompressor for decompressing said data representative of the contents of said storage means.

8. The system of Claim 6 further comprising:
a memory for storing an incoming voice message.

9. The systems of Claim 8 wherein said memory for storing an incoming voice message comprises a random access memory.

10. The system of Claim 6 wherein said filter comprises a notch filter.

11. The system of Claim 10 wherein said notch filter comprises an infinite impulse response filter.

12. The system of Claim 10 wherein said notch filter comprises a finite impulse response filter.

13. The system of Claim 6 wherein said facsimile transmission further comprises:
a frequency shift keyed signal having an upper frequency and a lower frequency.

14. The system of Claim 13 wherein said filter has a center frequency substantially equal to said upper frequency.

15. The system of Claim 13 wherein said filter has a center frequency substantially equal to said lower frequency.

16. A system for automatically answering voice telephone calls and receiving facsimile transmissions from a partially reflective bidirectional communication channel the system comprising:
a voice message generator for generating an outgoing voice message;
a facsimile receiver for receiving an incoming facsimile transmission from said partially reflective bidirectional communication channel;
a first detector for detecting a ringing signal from said partially reflective bidirectional communication channel and in response to the presence of said ringing signal, enabling said voice message means;
a second detector for detecting from said partially reflective bidirectional communication channel a facsimile signal within said facsimile transmission and in response to the presence of said facsimile signal disabling said voice message means and enabling said facsimile means; and
a filter for attenuating from said outgoing voice message signals substantially within the spectrum of said facsimile signal and providing a filtered outgoing voice message to said partially reflective bidirectional communication channel.

17. A system for automatically answering voice telephone calls and receiving facsimile transmissions from a partially reflective bidirectional communication channel the system comprising:
a voice answering machine for generating an outgoing message for transmission through said partially reflective bidirectional communication channel in response to a ringing signal from said partially reflective bidirectional communication channel;
a facsimile machine for receiving said facsimile transmission;
a detector for sensing the presence of a facsimile transmission from said partially reflective bidirectional communication channel and in response thereto disabling said voice answering machine and enabling said facsimile machine; and
a notch filter for attenuating said outgoing voice message substantially within the spectrum of said facsimile transmission.

18. A method of automatically answering voice telephone calls and receiving facsimile transmissions from a partially reflective bidirectional communication channel the method comprising the steps of:
detecting a ringing signal from said partially reflective bidirectional communication channel and in response thereto generating an outgoing voice message;
attenuating from said outgoing voice message a spectrum of a facsimile signal;
providing an attenuated outgoing voice message to said partially reflective bidirectional channel; and
detecting the presence of said facsimile signal from said partially reflective bidirectional communication channel and in response thereto terminating said outgoing voice message and enabling means for receiving said facsimile transmission.
